# EUROPEAN PATENT SPECIFICATION

(11) **EP 0 503 866 B1**
(45) Date of publication and mention of the grant of the patent: **03.07.1996**
(21) Application number: 92301963.2
(22) Date of filing: 09.03.1992
(51) Int. Cl.: C09D 5/03, C09D 151/08, C08F 283/10

(54) **Powder coating compositions**
Pulverlackzusammensetzung
Compositions de revêtement à poudre

(30) Priority: 12.03.1991 GB 9105132
(43) Date of publication of application: 16.09.1992
(73) Proprietor: CIBA-GEIGY AG, CH-4002 Basel (CH)
(72) Inventor: Bennett, Russell, Camberton, Cambridge (GB)
(74) Representative: Sparrow, Kenneth D.

(56) References cited:
- EP-A- 0 330 155
- CHEMICAL ABSTRACTS, vol. 83, no. 14, 06 October 1975, Columbus, OH (US); p. 178, AN 117216

## Description

The present invention relates to coating compositions, in particular to powder coating compositions which provide matt, smooth coatings.

There is an increasing commercial interest in the application of a coating via a powder composition, rather than by the additional liquid coating compositions.

For certain applications, it is desired that the powder coating composition should provide a matt finish on the article when coated. Examples of such applications include the internal fittings of vehicles where a low level of reflected light is required.

There have been several different techniques attempted to control the mattness of the finish provided by powder coating compositions.

One approach has been to add to the powder coating composition an additive, which does not react with any component of the composition, during the curing of the composition. Examples of such non-reactive additives include finely-ground silica or talcum. Such additives have the disadvantages that they can impair the impact strength of the coating and the free-flowing characteristics of the powder composition, making it difficult to prepare smooth coatings.

Another group of additives which has been considered is that comprising organic acid salts, which act as specific curing agents for the resin component of the powder coating. Again, the impact strength of the resulting cured coating is often inadequate, and the matt values can be sensitive to the bake times and temperatures used.

A third approach has been to modify the film-forming resin itself in an attempt to overcome these disadvantages.

An example of this latter device is found in European Patent Application No: 330155 in which there is described an advanced epoxy resin composition, useful, e.g., in the preparation of powder coatings, which contains an in situ prepared addition polymer resulting from (I) polymerizing at least one polymerizable ethylenically unsaturated monomer, free of groups reactive with an epoxy group, in at least one epoxy resin having an average of more than one vicinal epoxide group per molecule, and an average epoxide equivalent weight of not greater than 400, in the presence of at least one free radical polymerization catalyst selected from 1) one or more peroxide compounds in an amount of not greater than the equivalent of 2.75 percent by weight of benzoyl peroxide, based on the weight of the polymerizable monomer, or combination of monomers, or 2) one or more peroxide compounds in an amount of from 0.1 to 10 percent by weight, based on the weight of the polymerizable monomer, or combination of monomers; and (II) reacting the resultant composition with a compound having an average of more than one phenolic hydroxyl group per molecule, in a quantity which provides an epoxy: hydroxyl ratio of from 1.2:1 to 2.5:1, so as to provide a resultant advanced epoxy resin containing an addition polymer.

The method of EP 330155, therefore, copolymerizes a liquid epoxy resin with a polymerizable, ethylenically-unsaturated monomer which is free of groups which are reactive with an epoxy group, in the presence of a relatively small amount of peroxide catalyst; and then advances the product so obtained with a phenolic compound.

It is very unlikely that any grafting of the polymer, derived from the ethylenically-unsaturated monomer, on to the liquid epoxy backbone, will occur under the reaction conditions disclosed in EP 330155. In the context of epoxy resin/polymer systems, grafting of a polymer on to the epoxy backbone preferably takes place at one of the indicated carbon atoms of the epoxy backbone.

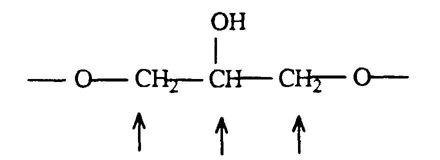

Such sites do not occur in liquid epoxy resins, only in advanced epoxy resins. While it is possible for grafting to occur at other sites of the epoxy chain, such other sites are much less preferred. Moreover, the amount of catalyst present during the polymerization of the polymerizable ethylenically unsaturated monomer, in the liquid epoxy resin, in the process of EP 330155, is below the level which would be required for any grafting of polymerized monomer on to the epoxy resin backbone.

We have now found that coatings, which are much smoother and more uniformly matt than those obtainable using the compositions disclosed in EP 330155, can be obtained from a powder coating composition comprising a solid epoxy resin, on to the backbone of which are grafted polymer chains derived from specific co-monomers.

Accordingly, the present invention provides a powder coating composition as defined in claim 1.

The solid epoxy resin, component a), of the graft copolymer A) is produced by advancing a liquid polyepoxide resin with a molecular deficiency of difunctional compound having two groups which are reactive with epoxide groups.

The liquid polyepoxide starting materials may be, e.g., those containing at least two terminal groups of formula: 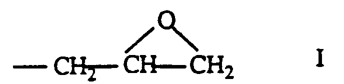 directly attached to an atom or atoms of oxygen, nitrogen or sulphur.

As examples of such resins there may be mentioned polyglycidyl esters, obtained by reaction of a compound containing two or more carboxylic acid groups per molecule, with epichlorohydrin or glycerol dichlorohydrin, in the presence of an alkali. Such polyglycidyl esters may be derived from aliphatic polycarboxylic acids, e.g. oxalic acid, succinic acid, glutaric acid, pimelic acid, suberic acid, azelaic acid, sebacic acid, and dimerised or trimerised linoleic acid; from cycloaliphatic polycarboxylic acids such as tetrahydrophthalic acid, 4-methyl-tetrahydrophthalic acid, hexahydrophthalic acid, and 4-methylhexahydrophthalic acid; and from aromatic polycarboxylic acids, such as phthalic acid, isophthalic acid, and terephthalic acid.

Further examples are polyglycidyl ethers obtainable by reaction of a compound containing at least two free alcoholic hydroxyl and/or phenolic hydroxyl groups per molecule with epichlorohydrin or glycerol dichlorohydrin under alkaline conditions or, alternatively, in the presence of an acid catalyst and subsequent treatment with alkali. These ethers may be made from acyclic alcohols such as ethylene glycol, diethylene glycol, and higher poly(oxyethylene) glycols, propane-1,2-diol and poly(oxypropylene) glycols, propane,1,3-diol, butane-1,4-diol, poly(oxytetramethylene)glycols, pentane-1,5-diol, hexane-2,4,6- triol, glycerol 1,1,1-trimethylolpropane, pentaerythritol, sorbitol, and poly(epichlorohydrin); from cycloaliphatic alcohols such as resorcitol, quinitol, bis(4-hydroxycyclohexyl)methane, 2,2-bis(4-hydroxycyclohexyl)propane, and 1,1-bis(hydroxymethyl)-cyclohex-3-ene; and from alcohols having aromatic nuclei, such as N,N-bis(2-hydroxyethyl)aniline and p,p¹-bis(2-hydroxyethyl-amino)diphenylmethane. Or they may be made from mononuclear phenols, such as resorcinol and hydroquinone, and from polynuclear phenols, such as bis(4-hydroxyphenol)methane, 4,4'-dihydroxydiphenyl, bis(4-hydroxyphenyl) sulphone, 1,1,2,2-tetrakis(4-hydroxyphenyl)-methane, 2,2-bis(4-hydroxyphenyl) propane, 2,2-bis (3,5-dibromo-4-hydroxyphenyl)propane (otherwise known as tetrabromobisphenol A), and novolaks formed from aldehydes such as formaldehyde, acetaldehyde, chloral, and furfuraldehyde, with phenols such as phenol itself, and phenol substituted in the ring by chlorine atoms or by alkyl groups each containing up to nine carbon atoms, such as 4-chlorophenol, 2-methylphenol, and 4-tert-butylphenol.

Poly(N-glycidyl) compounds include, for example, those obtained by dehydrochlorination of the reaction products of epichlorohydrin with amines containing at least two amino-hydrogen atoms such as aniline, n-butylamine, bis(4-aminophenyl)methane, and bis(4-methylaminophenyl)methane; triglycidyl isocyanurate; and N,N¹-diglycidyl derivatives of cyclic alkylene ureas, such as ethyleneurea and 1,3-propyleneurea, and hydantoins such as 5,5-dimethylhydantoin.

Examples of poly(S-glycidyl) compounds are di-S-glycidyl derivatives of dithiols such as ethane-1,2-dithiol and bis(4-mercaptomethylphenyl)ether.

Other liquid polyepoxides include those obtained from ethylenically unsaturated glycidyl esters of monocarboxylic acids, such as glycidyl acrylate, by homopolymerisation and by copolymerisation with α-ethylenically unsaturated compounds such as acrylate esters, methacrylate esters, styrene, and maleic and fumaric esters.

Polyepoxides having the 1,2-epoxide groups attached to different kinds of hetero atoms may be employed e.g. the N,N,O-triglycidyl derivative of 4-aminophenol, the glycidyl ether-glycidyl ester of salicylic acid, N-glycidyl-N¹-(2-glycidyloxypropyl)-5,5-dimethylhydantoin, and 2-glycidyloxy-1,3-bis(5,5-dimethyl-1-glycidylhydantoin-3-yl)propane.

Also, if desired, a mixture of liquid polyepoxides may be used. Preferred polyepoxides are polyglycidyl ethers and polyglycidyl esters. Specific preferred polyepoxides are diglycidyl ethers of 2,2-bis(4-hydroxyphenyl)propane, of bis(4-hydroxyphenyl)methane and having a 1,2-epoxide content of more than 1.0 equivalent per kilogram.

The liquid polyepoxide starting materials are advanced, to give a solid epoxy resin component a), by treatment with a molecular deficiency of a bisphenol, especially bisphenol A or tetrabromobisphenol A, a mononuclear dihydric phenol such as resorcinol, or a dicarboxylic acid such as hexahydrophthalic acid. Such a difunctional material reacts with the epoxide groups of the liquid polyepoxide, and so increases the molecular weight of the resin.

The advancement is preferably conducted by heating the liquid polyepoxide and the difunctional material together in the presence of an advancement catalyst e.g. a quaternary phosphonium or ammonium compound, a tertiary amine or imidazole compound e.g. ethyltriphenylphosphonium chloride, - bromide, -iodide, -acetate or -phosphate; tetrabutylphosphonium chloride, -bromide, -iodide or -acetate; benzyltrimethylammonium chloride or tetramethylammonium hydroxide; benzyl dimethylamine or tri-isopropyl amine; 2-methylimidazole or 2-vinylimidazole, or mixtures of these.

Component b) i) of the copolymer A may be e.g. n-octyl-, n-nonyl-, n-dodecyl- (lauryl); n-tridecyl, n-tetradecyl-, n-hexadecyl- or n-octadecyl acrylates or -methacrylates, or the branched alkyl isomers of the respective n- C₈-C₁₈ alkyl (meth) acrylates. The use of n-octyl-, lauryl -or n-octadecyl methacrylate is preferred, of these, lauryl methacrylate is most preferred.

Component b) ii) of the copolymer A is one or more compounds having the formula: 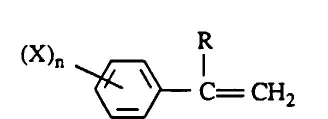 in which R is hydrogen or methyl, X is hydrogen, halogen, especially chlorine or bromine; C₁-C₄ alkyl or C₁-C₄ alkoxy; and n is 0,1,2,3,4 or 5. Examples of components b) ii) include styrene, mono- or poly- chlorostyrenes, mono- or poly- bromostyrenes, mono- or polymethylstyrenes, mono- or polybutylstyrenes, mono- or poly methoxy-styrenes, alpha- methylstyrene, in particular styrene.

Component b) iii) or c) ii) of the copolymer A may be e.g. hydroxymethyl acrylate, hydroxyethyl acrylate, hydroxypropyl acrylate or hydroxy-n-butyl acrylate or the corresponding - methacrylate monomers, preferably hydroxyethyl methacrylate.

Although the presence of component C is optional, it is preferred that component C is present. Component c) i) may be e.g. methyl, ethyl, n-propyl, isopropyl or n-butyl acrylate or methacrylate. Component c) is preferably methyl methacrylate.

Based on 100 parts by weight of the solid epoxy resin component, component a), component b) are present in the graft copolymer A) in amounts ranging from 5 to 50 parts by weight, preferably from 40 to 50 parts by weight; and component c) may be present in amounts ranging from 0 to 55 parts by weight, preferably from 40 to 50 pans by weight. These relative proportions of components a), b) and c) have been found to be important in producing final films having the best combination of a matt (low gloss) and smooth finish.

The catalyst component used to produce copolymer A), may be any catalyst which is effective to promote grafting of component b) and, optionally, component c), on to the backbone of component a). Of particular interest are inorganic or organic peroxides. Examples of inorganic peroxides are hydrogen peroxide and persulphates such as sodium or potassium persulphate. Examples of organic peroxides are acyl peroxides such as benzoyl peroxide, p-chlorobenzoyl peroxide and t-butyl perbenzoate; ketone peroxides such as methyl ethyl ketone peroxide and cyclohexanone peroxide; and hydroperoxides such as cumene hydroperoxide and t-butyl hydroperoxide.

The amount of component d) present during the graft polymerization reaction of the present invention may range from 0.5 to 15 parts by weight, preferably from 1 to 10 parts by weight, based on 100 parts by weight of component a) in order to achieve significant levels of grafting of a polymer from monomers b), and optionally c), on to the polymer chain of the epoxy resin. Some un-grafted polymer derived from monomers b) and/or c) will usually be present in the copolymer A).

The use of the preferred peroxide catalysts has been found to produce graft polymer micelles of small mean particle size producing, in turn, matt and smooth powder coatings.

The curing agent, component B), of the powder coating compositions of the present invention, may be an aliphatic amine; dicyandiamide; an aromatic amine such as bis(3-aminophenyl)- and bis(4-aminophenyl)- sulphone and bis(4-aminophenyl) methane, which are usually used together with an accelerator such as a BF₃-amine complex; a carboxylic acid such as a polycarboxylic acid anhydride, e.g. cyclohexane -1,2-dicarboxylic acid anhydride, methylbicyclo [2,2,1]-hept-5-ene-2,3-dicarboxylic acid anhydride, pyromellitic acid dianhydride or benzophenone tetracarboxylic acid dianhydride; phenol compounds; e.g. phenol novolaks or polyesters, e.g. those derived from aromatic polycarboxylic acids such as phthalic acid or terephthalic acid and polyols e.g. ethylene glycol or trimethylolpropane.

The amount of the curing agent, component B), present in the powder coating compositions of the invention may range from 1 to 75% by weight, preferably from 5 to 40% by weight, based on the graft copolymer A).

The powder coating composition of the present invention preferably also contains a curing agent accelerator e.g. an amino-substituted pyridine, an imidazole, a metal salt, a tertiary amine, a phenol or a mixture of these, preferably an imidazole such as 2-methylimidazole.

The powder coating compositions of the present invention may also contain one or more further conventional additives such as particulate fillers or pigments e.g. barytes, titanium dioxide, carbon black, silica flour, calcium carbonate or mixtures of these; flow control agents e.g. polyacrylates such as ethyl acrylate/2-ethylhexyl acrylate copolymers and poly(butyl acrylate); texture control additives, e.g. glass microspheres, metal powders and polymer powders; air release agents e.g. benzoin; gloss control additives e.g. amorphous silicas and silicic acid; and slip aids.

The powder coating compositions of the present invention may be prepared by simple mixing of the ingredients, for example in a ball mill. Alternatively, the various components may be melted together, conveniently in an extruder such as a Buss Ko-Kneader; and then the cooled mass may be ground to a powder. The powder compositions so obtained preferably have a particle size ranging from 5 to 100, especially 20 to 50 micrometres.

The present invention also provides a method of coating an article comprising applying a powder coating composition of the present invention to the article; and curing the coating so applied to the article, thereby providing an article coated with a smooth matt coating. The present invention further provides an article so coated.

The powder coating composition may be applied on to the article, e.g. a metal, glass, plasrics or fibre-reinforced plastics substrate, by electrostatic spraying or by using a fluidized bed, which may be electrostatic. The composition is preferably applied by means of an electrostatic spray gun using, e.g. a voltage ranging from 10 to 100 kilovolts. The thickness of the coating applied may be varied by varying the number of passes of the gun over the surface to be coated. After application of the powder composition of the invention, the coated article is baked at a temperature ranging e.g. from 150°C to 250°C, for a time ranging e.g. from 5 to 25 minutes to cure the powder coating and provide a smooth, matt finish.

The following Examples further illustrate the present invention.

In the Examples, epoxy resins are used having the formula (1) or (2):

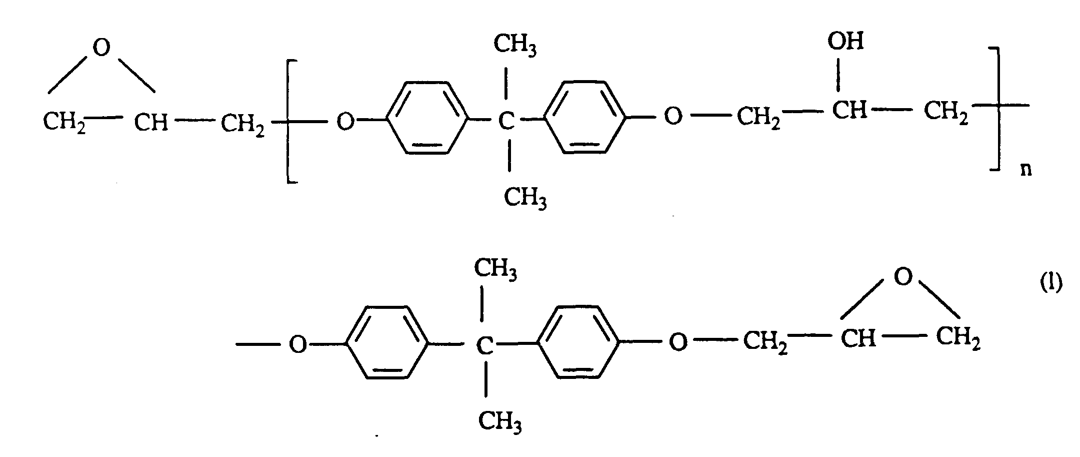

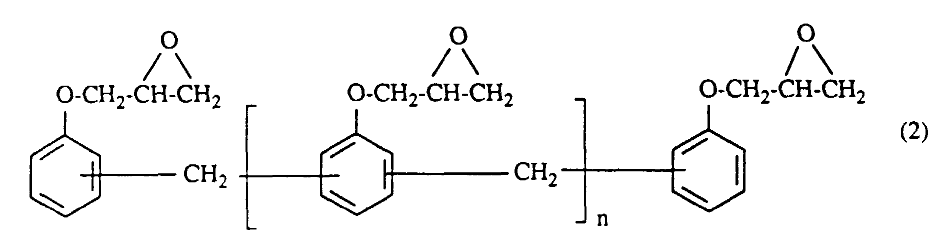

### Resin I

Is an advanced (chain extended) bisphenol A epoxy resin of formula (1) in which the average value of n is 3, its epoxide equivalent weight is 570-595, and softening point (DIN 51920) is 82-90°C.

### Resin II

Is an advanced (chain extended) bisphenol A epoxy resin of formula (1) in which the average value of n is 4, its epoxide equivalent weight is 715-750 and the softening point (DIN 51920) is 95- 101°C.

### Resin III

Is an advanced (chain extended) bisphenol of A epoxy resin of formula (1) in which the average value of n is 4, its epoxide equivalent weight is 730-810; and its softening point (DIN 51920) is about 100°C.

### Resin IV

Is an advanced (chain extended) bisphenol A epoxy resin of formula (1) in which n is 9, containing 10% by weight of an epoxy phenol novolak of formula (2) in which the average value of n is 1.6; its epoxide equivalent weight is 775-855; and its softening point (DIN 51920) is about 110°C.

### Resin V

Is an advanced (chain extended) bisphenol A epoxy resin of formula (1) in which the average value of n is 10; its epoxide equivalent weight is 1515-1665; and its softening point (DIN 51920) is 125- 135°C.

### Resin VI

Is a liquid bisphenol A epoxy resin of formula (1) in which the average value of n is 0.2; its epoxide equivalent weight is 186-190; and its viscosity at 25°C is 10-14°C.

### Example 1

A commercial grade (Resin II) of advanced diglycidyl ether of Bisphenol A (1000 g) is charged to a 5 litre, round bottomed, glass reaction flask. A cover is placed over the flask before the flask is placed into an oven at 140°C to melt the Resin II. After 16 hours the flask is removed to a fume cupboard and fitted with a five necked lid, a water-cooled condenser, nitrogen purge, stirrer, thermocouples and an addition funnel. Heating to 160°C and the nitrogen purge are initiated on the stimed flask contents. 40 minutes later, with the temperature steady at 160°C, a premix of lauryl methacrylate (460 g), methyl methacrylate (500 g) and 80% cumene hydroperoxide (30 g) is charged to the addition funnel and added dropwise to the stirred flask contents. The reaction temperature is maintained between 155°C and 165°C throughout the premix addition. After 1 hour and 50 minutes, the premix addition is complete. Post reaction of the stirred flask contents is continued for 1 hour at 160°C. After 1 hour, 80% cumene hydroperoxide (4 g) is charged to the addition funnel and added dropwise to the stirred flask contents. Two minutes later, the 80% cumene hydroperoxide addition is complete. Post reaction of the stimed flask contents is continued for 1 hour at 160°C. After 1 hour the product is discharged.

The reaction product is a white, opaque solid of 550 mpa s viscosity at 175°C and an epoxide content of 0.73 mol/kg.

### Example 2

Using the procedure described in Example 1, but replacing the Resin II by another commercial grade (Resin III) of advanced diglycidyl ether of Bisphenol A, the reaction product is a white, opaque solid of 700 mPa s viscosity at 175°C and an epoxide content of 0.72 mol/kg.

### Example 3

Using the procedure described in Example 1, but replacing the Resin I by another commercial grade (Resin I) of advanced diglycidyl ether of Bisphenol A, the reaction product is a white, opaque solid with an epoxide content of 0.90 mol/kg.

### Example 4

Using the procedure described in Example 1, but replacing the Resin II by another commercial grade (Resin IV) of epoxy novolac modified advanced diglycidyl ether of Bisphenol A, the reaction product is a white, opaque solid with an epoxide content of 0.64 mol/kg.

### Example 5

Using the procedure described in Example 1, but replacing the Resin II by another commercial grade (Resin V) of advanced diglycidyl ether of Bisphenol A, the reaction product is a white, opaque solid with an epoxide content of 0.27 mol/kg.

### Example 6

A commercial grade (Resin VI) of a diglycidyl ether of Bisphenol A (700 g) is charged to a 5 litre, 5 necked, round bottomed, glass reaction flask fitted with a water-cooled condenser, nitrogen purge, stirrer, thermocouples and an addition funnel. Heating to 100°C and the nitrogen purge are initiated on the stirred flask contents. 30 minutes later, with the temperature stable at 100°C, a premix of 2-methyl imidazole (0.03 g) and butan-1-ol (0.17 g) is added, via a pasteur pipette, to the stirred flask contents. 2 minutes later, with the temperature steady, Bisphenol A (270.5 g) is added to the stirred flask content via a powders funnel. 10 minutes later, the temperature has regained 100°C and hearing to 175°C is initiated. Reaction causes a steady exotherm that peaks 32 minutes later at 183°C. 20 minutes later, the temperature is steady at 175°C. 85 minutes later, the epoxide value is measured at 1.35 mol/kg and the heating stopped to allow the stirred flask contents to cool. 30 minutes later, the temperature is 160°C and the heating initiated to hold that temperature. A premix of lauryl methacrylate (447 g), methyl methacrylate (485 g) and 80% cumene hydroperoxide (29 g) is charged to the addition funnel and added dropwise to the stirred flask contents. The reaction temperature is maintained between 155°C and 165°C throughout the premix addition. After 2 hours, the premix addition is complete. Post reaction of the stirred flask contents is continued at 160°C for 1 hour. After 60 minutes, 80% cumene hydroperoxide (4 g) is charged to the addition funnel and added dropwise to the stirred flask contents. Two minutes later, the 80% cumene hydroperoxide addition is complete. Post reaction of the stirred flask contents is continued for 1 hour at 160°C. After 60 minutes, the product is discharged.

The reaction product is a white, opaque solid of 550 mPa s viscosity at 175°C and an epoxide content of 0.66 mol/kg.

### Example 7

Using the procedure described in Example 1, but replacing the 30 g of 80% cumene hydroperoxide by 48 g of benzoyl peroxide; the reaction product is a white, opaque solid of 2300 mPa s viscosity at 175°C and an epoxide content of 0.62 mol/kg.

### Example 8

Using the procedure of Example 1, but replacing the 30 g of 80% cumene hydroperoxide by 26 g of 1,3-bis(t-butylperoxy-isopropyl) benzene, the reaction product is a white, opaque solid of 300 mPa s viscosity at 175°C and an epoxide content of 0.71 mol/kg.

### Example 9

Using the procedure described in Example 1, but replacing the 30 g of 80% cumene hydroperoxide by 30 g of di-t-butyl peroxide, the reaction product is a white, opaque solid of 500 mPa s viscosity at 175°C and an epoxide content of 0.72 mol/kg.

### Example 10

Using the procedure described in Example 1, but replacing the 30 g of 80% cumene hydroperoxide by 30 g t-butyl peroxybenzoate, the reaction product is a white, opaque solid of 700 mPa s viscosity at 175°C and an epoxide content of 0.70 mol/kg.

### Example 11

A commercial grade (Resin II) of advanced diglycidyl ether of Bisphenol A (1000 g) is charged to a 5 litre, round bottomed glass reaction flask. A cover is placed over the flask before the flask is placed in to an oven at 120°C to melt the Resin II. After 16 hours, the flask is removed to a fume cupboard and fitted with a five necked lid, a water-cooled condenser, nitrogen purge, stirrer, thermocouples and an addition funnel. Heating to 160°C and the nitrogen purge are initiated on the stirred vessel contents. 30 minutes later, with the temperature steady at 160°C, a premix of lauryl methacrylate (230 g), methyl methacrylate (250 g) and 80% cumene hydroperoxide (15 g) is charged to the addition funnel and added dropwise to the stirred flask contents. The reaction temperature is maintained between 155°C and 165°C throughout the premix addition. After 2 hours the premix addition is complete. Post reaction of the stirred flask contents is continued for 1 hour at 160°C. After 1 hour, 80% cumene hydroperoxide (2 g) is charged to the addition funnel and added dropwise to the stirred flask contents. 2 minutes later, the 80% cumene hydroperoxide addition is complete. Post reaction of the stirred flask contents is continued for 1 hour at 160°C. After 60 minutes the product is discharged.

The reaction product is a white, opaque solid with an epoxide content of 0.94 mol/kg.

### Example 12

A commercial grade (Resin II) of advanced diglycidyl ether of Bisphenol A (1000 g) is charged to a 5 litre, round bottomed, glass reaction flask. A cover is placed over the flask before the flask is placed in to an oven at 120°C to melt the Resin II. After 16 hours, the flask is removed to a fume cupboard and fitted with a five necked lid, a water-cooled condenser, nitrogen purge, stirrer, thermocouples and an addition funnel. Heating to 160°C and the nitrogen purge are initiated on the stirred vessel contents. 70 minutes later, with the temperature steady at 160°C, a premix of lauryl methacrylate (690 g), methyl methacrylate (750 g) and 80% cumene hydroperoxide (45 g) is charged to the addition funnel and added dropwise to the stirred flask contents. The reaction temperature is maintained between 155°C and 165°C throughout the premix addition. After 1 hour and 50 minutes, the premix additions is complete. Post reaction of the stirred flask contents is continued for 1 hour at 160°C. After 1 hour, 80% cumene hydroperoxide (8 g) is charged to the addition funnel and added dropwise to the stirred flask contents. 2 minutes later, the 80% cumene hydroperoxide addition is complete. Post reaction of the stirred flask contents is continued for 1 hour at 160°C. After 60 minutes the product is discharged.

The reaction product is a white, opaque solid of 150 mPa s viscosity at 175°C and an epoxide content of 0.55 mol/kg.

### Example 13

A commercial grade (Resin II) of advanced diglycidyl ether of Bisphenol A (1000 g) is charged to a 5 litre, round bottomed, glass reaction flask. A cover is placed over the flask before the flask is placed into an oven at 120°C to melt the Resin II. After 16 hours, the flask is removed to a fume cupboard and fitted with a five necked lid, a water-cooled condenser, nitrogen purge, stirrer, thermo couples and an, addition funnel. Heating to 160°C and the nitrogen purge are initiated on the stirred vessel contents. 30 minutes later with the temperature steady at 160°C, a premix of lauryl methacrylate (914 g), methyl methacrylate (250 g) and 80% cumene hydroperoxide (22 g) is charged to the addition funnel and added dropwise to the stirred flask contents. The reaction temperature is maintained between 155°C and 165°C throughout the premix addition. After 2 hours and 5 minutes, the premix additions is complete. Post reaction of the stirred flask contents is continued for 1 hour at 160°C. After 1 hour, 80% cumene hydroperoxide (3 g) is charged to the addition funnel and added dropwise to the stirred flask contents. 2 minutes later, the 80% cumene hydroperoxide addition is complete. Post reaction of the stirred flask contents is continued for 2 hours and 45 minutes at 160°C. After 165 minutes the product is discharged.

The reaction product is a white, opaque solid of 300 mPa s viscosity at 175°C and an epoxide content of 0.63 mol/kg.

### Example 14

Using the procedure described in Example 13, but using a premix of lauryl methacrylate (230 g), methyl methacrylate (590 g) and 80% cumene hydroperoxide (30 g), the reaction product is white, opaque solid of 2600 mPa s viscosity at 175°C and an epoxide content of 0.78 mol/kg.

### Example 15

Using the procedure described in Example 1, but reducing the amount of 80% cumene hydroperoxide in the premix to 15 g, and the amount of the 80% cumene hydroperoxide in the post reaction to 2 g, the reaction product is a white, opaque solid of an epoxide content of 0.73 mol/kg.

### Example 16

A commercial grade (Resin II) of advanced diglycidyl ether of Bisphenol A (2000 g) is charged to a 5 litre, round bottomed, glass reaction flask. A cover is placed over the flask before the flask is placed into an oven at 140°C to melt the Resin II. After 16 hours, the flask is removed to a fume cupboard and fitted with a five necked lid, a water-cooled condenser, nitrogen purge, stirrer, thermocouples and an addition funnel. Heating to 160°C and the nitrogen purge are initiated on the stirred vessel contents. 40 minutes later, with the temperature steady at 160°C, a premix of styrene (800 g), methyl methacrylate (200 g) and 80% cumene hydroperoxide (30 g) is charged to the addition funnel and added dropwise to the stirred flask contents. The reaction temperature is maintained between 175°C and 180°C throughout the premix addition. After 1 hour and 55 minutes, the premix addition is complete. Post reaction of the stirred flask contents is continued for 1 hour at 160°C. After 1 hour 80% cumene hydroperoxide (5 g) is charged to the addition funnel and added dropwise to the stirred flask contents. 2 minutes later, the 80% cumene hydroperoxide addition is complete. Post reaction of the stirred flask contents is continued for 1 hour at 160°C. After 60 minutes the product is discharged.

The reaction product is a white, opaque solid of 1900 mPa s viscosity at 175°C and epoxide content of 0. 87 mol/kg.

### Example 17

Using the procedure of Example 16, but using a premix comprising ethyl acrylate (1000 g) and 80% cumene hydroperoxide (30 g), the reaction product is a white, opaque solid of 600 mPa s viscosity at 175°C and an epoxide content of 0.89 mol/kg.

### Example 18

Using the procedure of Example 1, but using a premix of 2-ethylhexyl acrylate (333 g), methyl methacrylate (500 g) and 80% cumene hydroperoxide (30 g), the reaction product is a white, opaque solid of 800 mPa s viscosity at 175°C and an epoxide content of 0.72 mol/kg.

### Example 19

Using the procedure of Example 1, but replacing the premix used therein by a premix comprising butyl acrylate (232 g), methyl methacrylate (500 g) and 80% cumene hydroperoxide (30 g), the reaction product is a white, opaque solid of 1200 mPa s viscosity at 175°C and an epoxide content of 0.78 mol/kg.

### Example 20

The procedure of Example 1 is repeated, but using a premix comprising stearyl acrylate (340 g), methyl methacrylate (500 g) and 80% cumene hydroperoxide (30 g), and the reaction product is a white, opaque solid of 300 mPa s viscosity at 175°C and an epoxide content of 0.82 mol/kg.

### Example 21

The procedure of Example 1 is repeated except that the premix used comprises lauryl acrylate (460 g), methyl methacrylate (500 g) and 80% cumene hydroperoxide, and the reaction product is a white, opaque solid of 600 mPa s viscosity at 175°C and an epoxide content of 0.71 mol/kg.

### Example 22

The procedure of Example 1 is repeated, but using a premix comprising styrene (188 g), methyl methacrylate (500 g) and 80% cumene hydroperoxide, and the reaction product is a white, opaque solid of 800 mPa s viscosity at 175°C and an epoxide content of 0.74 mol/kg.

### Example 23

A commercial grade (Resin II) of advanced diglycidyl ether of Bisphenol A (500 g) is charged to a 5 litre, round bottomed glass reaction flask. A cover is placed over the flask before the flask is placed into an oven at 120°C to melt the Resin II. After 16 hours, the flask is removed to a fume cupboard and fitted with a five necked lid, a water-cooled condenser, nitrogen purge, stirrer, thermo couples and an addition funnel. Heating to 160°C and the nitrogen purge are initiated on the stirred vessel contents. 45 minutes later, with the temperature steady at 160°C, a premix of lauryl methacrylate (230 g), n-butyl methacrylate (335 g) and 80% cumene hydroperoxide (15 g) is charged to the addition funnel and dropwise to the stirred flask contents. The reaction temperature is maintained between 155°C and 165°C throughout the premix addition. After 1 hour and 55 minutes, the premix addition is complete. Post reaction of the stirred flask contents is continued for 1 hour at 160°C. After 1 hour, 80% cumene hydroperoxide (2 g) is charged to the addition funnel and added dropwise to the stirred flask contents. 2 minutes later, the 80% cumene hydroperoxide addition is complete. Post reaction of the stirred flask contents is continued for 1 hour at 160°C. After 60 minutes the product is discharged.

The reaction product is a white, opaque solid of 400 mPa s viscosity at 175°C and an epoxide content of 0.59 mol/kg.

### Example 24

A commercial grade (Resin II) of advanced diglycidyl ether of Bisphenol A (614 g) is charged to a 5 litre, round bottomed, glass reaction flask. A cover is placed over the flask before the flask is placed into an oven at 120°C to melt the Resin II. After 16 hours, the flask is removed to a fume cupboard and fitted with a five necked lid, a water-cooled condenser, nitrogen purge, stirrer, thermocouples and an addition funnel. Heating to 160°C and the nitrogen purge are initiated on the stirred vessel contents. 40 minutes later, with the temperature steady at 160°C, a premix of lauryl methacrylate (282 g),ethyl methacrylate (350 g) and 80% cumene hydroperoxide (18 g) is charged to the addition funnel and added dropwise to the stirred flask contents. The reaction temperature is maintained between 155°C and 165°C throughout the premix addition. After 1 hour 50 minutes the premix addition is complete. Post reaction of the stirred flask contents is continued for 1 hour at 160°C. After 1 hour 80% cumene hydroperoxide (2.5 g) is charged to the addition funnel and added dropwise to the stirred flask contents. 2 minutes later, the 80% cumene hydroperoxide addition is complete. Post reaction of the stirred flask contents is continued for 1 hour at 160°C. After 60 minutes the product is discharged.

The reaction product is a white, opaque solid of 200 mPa s viscosity at 175°C and an epoxide content of 0.71 mol/kg.

### Example 25

Using the procedure of Example 1, but using a premix comprising lauryl methacrylate (460 g), ethyl acrylate (500 g) and 80% cumene hydroperoxide, the reaction product is a white, opaque solid of 300 mPa s viscosity at 175°C and an epoxide content of 0.59 mol/kg.

Samples of modified epoxy resins from Example 1 - 25 (10 g) are "dissolved" in methylethyketone (90 g) to form a clear or slightly hazy solution. The solution is poured on to clean, clear glass plates and allowed to lacquer dry in a dust-free environment. Using a transmitted light microscope with a black and white video imaging attachment, the dried film of modified epoxy resin is studied at 400-fold magnification and a permanent record of the video image is taken using a video image processor.

Studying these images revealed that those powder coating resins giving the best performance, i.e. low gloss plus smooth films in powder coating formulations, give a slightly hazy lacquer dried film on the glass plates, which has an even distribution of acrylic in small (about 4µ) even micelles, within the overall continuum of epoxy. Due to the incompatibility of the acrylic and Bisphenol A epoxy, the acrylic chains tend to coil about each other and cause discrete pockets of high acrylic density. Due to the grafting effect, these pockets are evenly distributed throughout the continuous phase, since the acrylic cannot migrate into larger globules.

Those modified epoxy resins, in which little or no grafting has occured, give distinctly different images and distinctly different appearance when formulated into powder coatings. The powder coatings tend to be more textured and/or higher in gloss. The image from microscopy shows the film has clear areas of incompatible epoxy in acrylic or acrylic in epoxy, and in both cases the dispersed phase is in very large globules (about 50µ) rather than small, evenly dispersed micelles.

### Example 26

### Formulation and Processing of Coatings

Portions of modified epoxy resins from Example 1 to 25 are ground into granules using a Christy Hunt Spruemajor. Formulation weights, as per Table 1, of modified epoxy resin, hardener, flow agent masterbatch (GT 2874), air release additive (benzoin), titanium dioxide pigment and any further components are placed in a plastic bucket, sealed and placed on mechanical rollers to ensure a homogeneous dry blend. The dry blend formulations are then extruded in a Buss-Ko-Kneader Type PR 46 single screw extruder with zone 1 at 40°C and zone 2 at 85°C. The extrudate is immediately cooled on a cold table and then pulverised to a fine powder using a Christy Hunt Spruemaster. The pulverised powder is sieved through 75 micron (BS 410) laboratory test sieves. The below 75 micron powder coating formulations are applied to degreased mild steel plates using a Controsion PET-SRF electrostatic spraying unit. The electrostatically coated plates are cured at 180°C in an Heraeus LUT 5050 EK vented fan oven; residence time of the plates is 20 minutes. After removal from the oven, the plates are allowed to cool and then evaluated using the following methods:-
- Appearance :: Visual check of flow, matting and film defects.
- Surface gloss :: Using a 60° angle head, the gloss reflectance of the coating is measured using a gloss meter.
- Coating thickness :: Determined using a Elcometer 150 FN minitector.

Methyl ethyl ketone rubs: A piece of paper-cloth is soaked in MEK and with firm pressure rubbed backwards and forwards across the coating twenty times beneath the forefinger (one rub = one forward plus one backward movement). The damage done to the film is then assessed using the following table:-

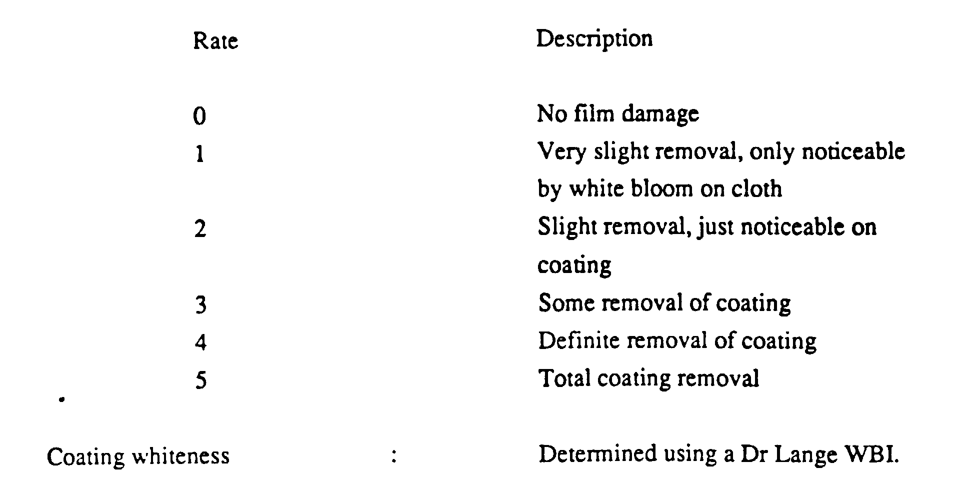

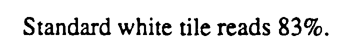

The results of these tests are detailed in Table 1.

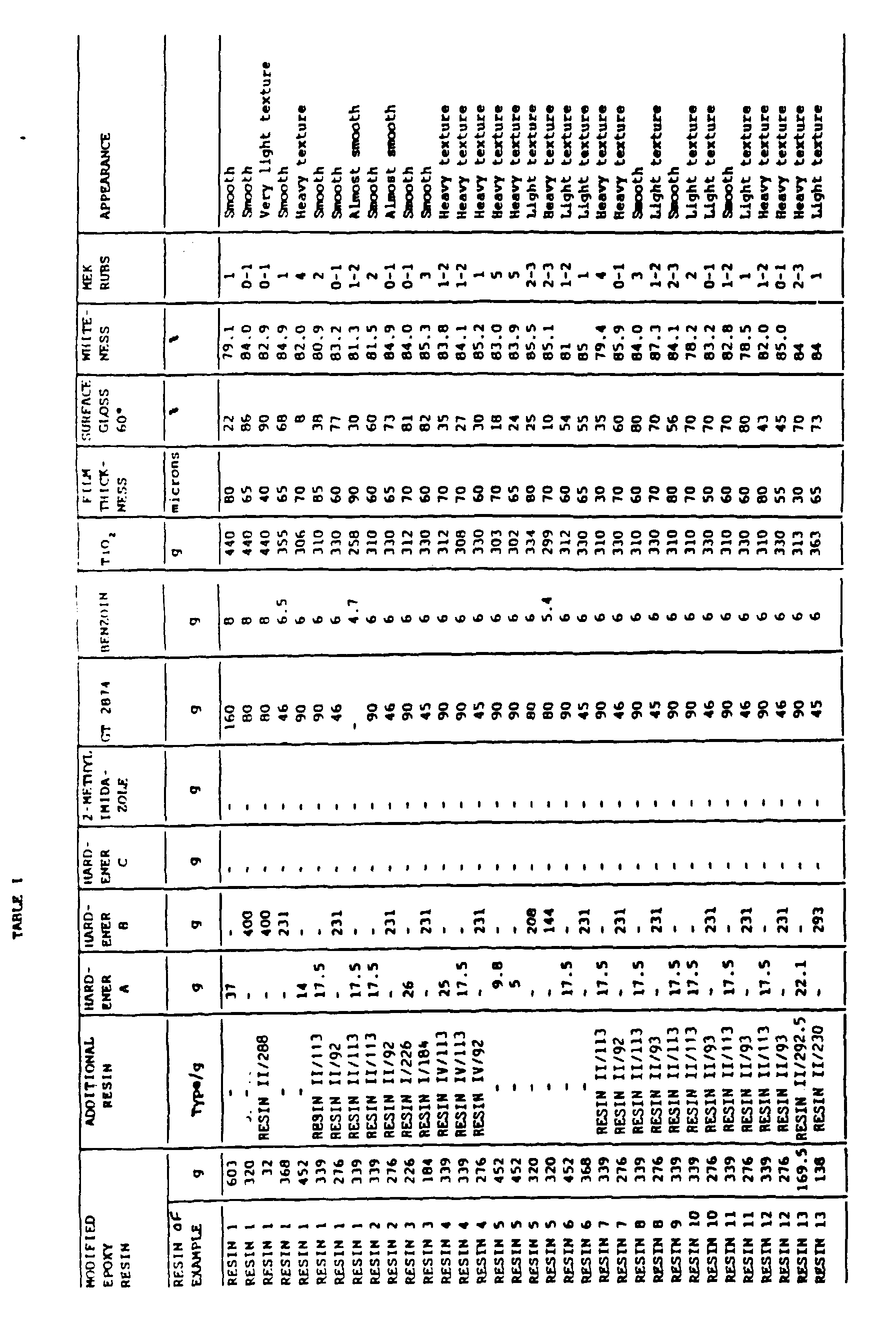

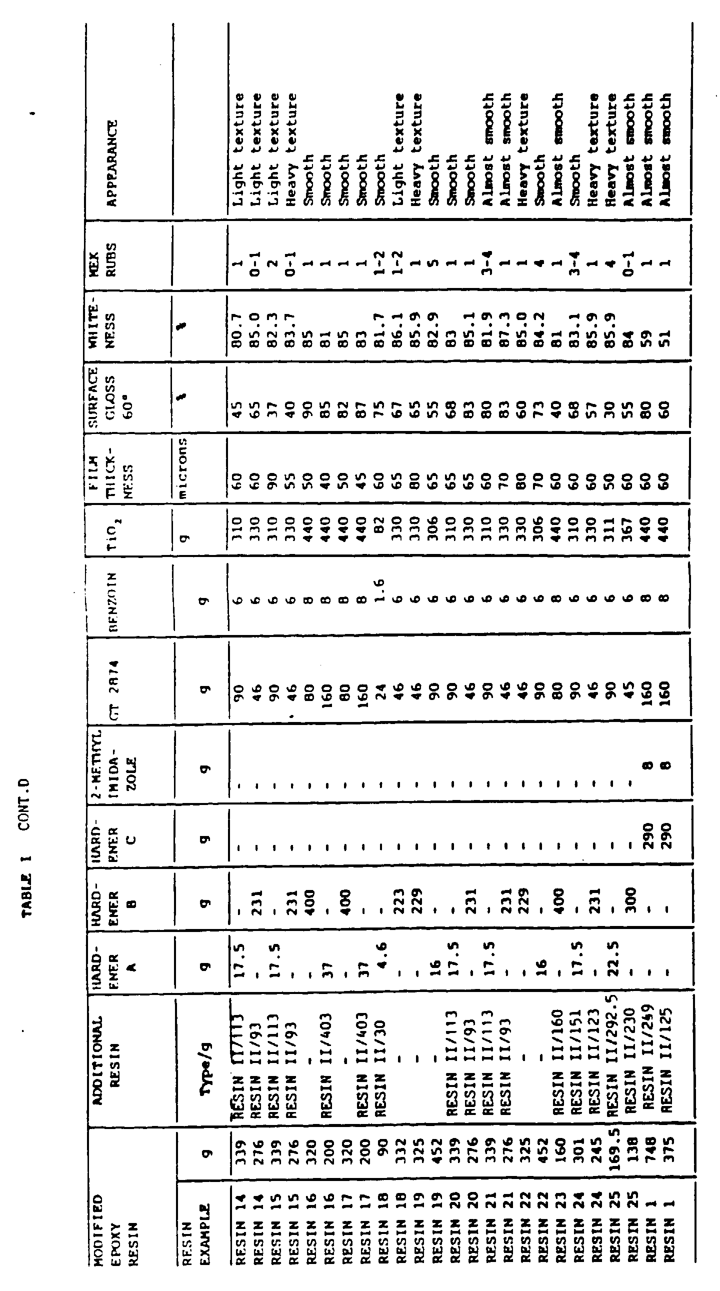

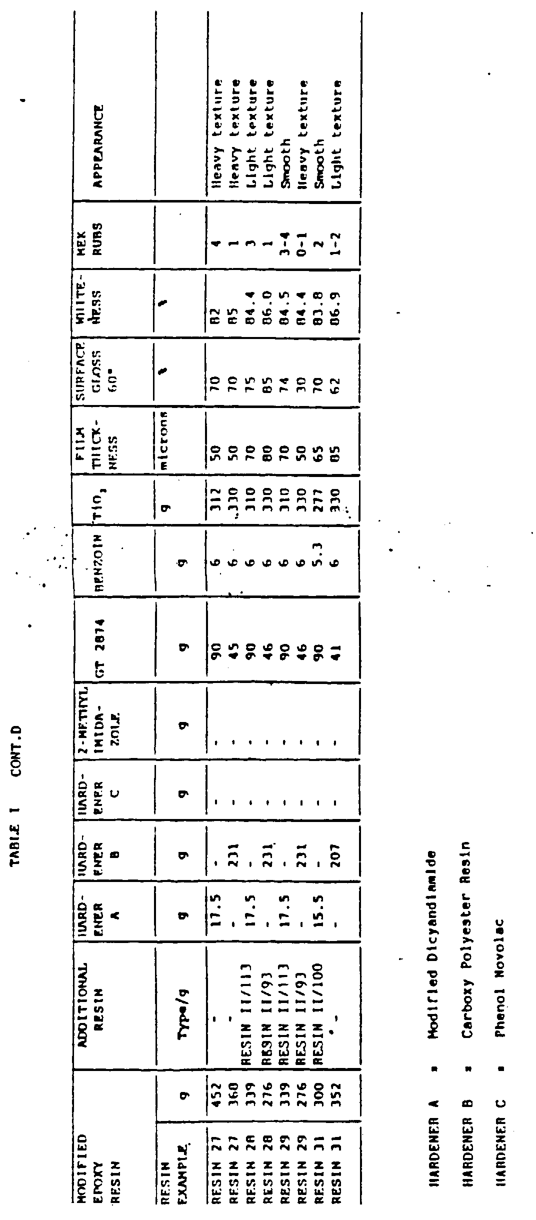

## Claims (Claims for the following Contracting State(s): AT, BE, CH, DE, FR, GB, IT, LI, NL)

1. A powder coating composition comprising A) a copolymer produced by polymerizing, under graft polymerization conditions, a) a solid epoxy resin having an average of more than one vicinal epoxy group per molecule and an average epoxide equivalent weight greater than 500, produced by advancing a polyepoxide which is a liquid polyglycidyl ether or polyglycidyl ester with a molecular deficiency of a bisphenol, a mononuclear dihydric phenol or a dicarboxylic acid; b) one or more of i) a (C₈-C₁₈) alkyl (meth)acrylate, ii) a vinyl aromatic compound of formula 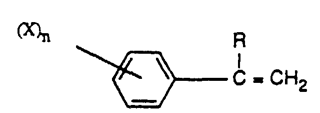 where R is hydrogen or methyl, X is hydrogen, halogen, C₁-C₄-alkyl or C₁-C₄ alkoxy and n is 0, 1, 2, 3, 4 or 5, and iii) a (C₁-C₄) hydroxyalkyl (meth)acrylate, and c) optionally one or more of i) a (C₁-C₄)alkyl (meth)acrylate and ii) a (C₁-C₄) hydroxyalkyl (meth)acrylate, provided that components b) and c) are not each exclusively a (C₁-C₄) hydroxyalkyl (meth)acrylate, in the presence of d) a catalyst which is effective to promote the graft polymerization of a polymer formed from component b), and optionally c), onto the polymer chain of component a), component b) being present in an amount of 5 to 50% by weight based on the weight of component a) and component c) being present in an amount of 0 to 55% by weight, based on the weight of component a) and B) a curing agent for copolymer A).

2. A composition according to claim 1 in which the polyepoxide is a diglycidyl ether of 2,2-bis(4-hydroxyphenyl)propane or of bis(4-hydroxyphenyl)methane and has a 1,2-epoxide content of more than 1.0 equivalent per kilogram.

3. A composition according to claim 1 or 2 in which the bisphenol is bisphenol A or tetrabromobisphenol A, the dihydric phenol is resorcinol and the dicarboxylic acid is hexahydrophthalic acid.

4. A composition according to any of the preceding claims in which the component b) of the copolymer A) is n-octyl-, lauryl- or octadecyl methacrylate, styrene, hydroxyethyl methacrylate or a mixture of these.

5. A composition according to any of the preceding claims in which the component c) of the graft copolymer A) is methyl methacrylate.

6. A composition according to any of the preceding claims in which component b) is present in copolymer A) in an amount of 40 to 50% by weight, based on the weight of component a).

7. A composition according to any of the preceding claims in which component c) is present in copolymer A) in an amount of 40 to 50% by weight, based on the weight of component a).

8. A composition according to any of the preceding claims in which the catalyst component d) is an inorganic or organic peroxide.

9. A composition according to claim 8 in which the catalyst component d) is an acyl peroxide; a ketone peroxide; or a hydroperoxide.

10. A composition according to claim 9 in which the catalyst component d) is benzoyl peroxide, p-chlorobenzoyl peroxide or t-butylperbenzoate; methyl ethyl ketone peroxide or cyclohexanone peroxide; or cumene peroxide or t-butyl hydroperoxide.

11. A composition according to any of the preceding claims in which the amount of catalyst component d), present during the graft polymerization reaction, ranges from 1 to 10% by weight, based on the weight of component a), in order to achieve significant levels of grafting of the polymer from monomer b) and, optionally, c) on to the polymer chain of component a).

12. A composition according to any of the preceding claims in which the curing agent, component B), is an aliphatic amine; dicyandiamide; an aromatic amine; a carboxylic acid; a phenol compound; or a polyester.

13. A composition according to any of the preceding claims in which the curing agent is present in amount of 1 to 75% by weight, based on the weight of the graft copolymer.

14. A composition according to claim 13 in which the curing agent is present in an amount of 5 to 40% by weight, based on the weight of the graft copolymer.

15. A composition according to any of the preceding claims in which a curing agent accelerator is present.

16. A composition according to any of the preceding claims in which there are also present one or more of a particulate filler or pigment; a flow control agent; a texture control additive; an air release agent; a gloss control additive; and a slip aid.

17. A method of coating an article comprising applying a powder coating according to any of the preceding claims to an article to be coated; and curing the article so coated.

18. An article when coated by a method claimed in claim 17.

## Claims (Claims for the following Contracting State(s): ES)

1. A process for the preparation of a powder coating composition comprising mixing together A) a copolymer produced by polymerizing, under graft polymerization conditions, a) a solid epoxy resin having an average of more than one vicinal epoxy group per molecule and an average epoxide equivalent weight greater than 500, produced by advancing a polyepoxide which is a liquid polyglycidyl ether or polyglycidyl ester with a molecular deficiency of a bisphenol, a mononuclear dihydric phenol or a dicarboxylic acid; b) one or more of i) a (C₈-C₁₈) alkyl (meth)acrylate, ii) a vinyl aromatic compound of formula 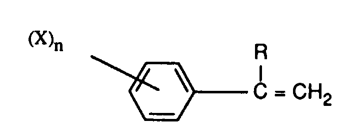 where R is hydrogen or methyl, X is hydrogen, halogen, C₁-C₄ alkyl or C₁-C₄ alkoxy and n is 0, 1, 2, 3, 4 or 5, and iii) a (C₁-C₄) hydroxyalkyl (meth)acrylate, and c) optionally one or more of i) a (C₁-C₄) alkyl (meth)acrylate and ii) a (C₁-C₄) hydroxyalkyl (meth)acrylate, provided that components b) and c) are not each exclusively a (C₁-C₄) hydroxyalkyl (meth)acrylate, in the presence of d) a catalyst which is effective to promote the graft polymerization of a polymer formed from component b), and optionally c), onto the polymer chain of component a), component b) being present in an amount of 5 to 50% by weight based on the weight of component a) and component c) being present in an amount of 0 to 55% by weight, based on the weight of component a) and B) a curing agent for copolymer A).

2. A process according to claim 1 in which the polyepoxide is a diglycidyl ether of 2,2-bis(4-hydroxyphenyl) propane or of bis(4-hydroxyphenyl)methane and has a 1,2-epoxide content of more than 1.0 equivalent per kilogram.

3. A process according to claim 1 or 2 in which the bisphenol is bisphenol A or tetrabromobisphenol A, the dihydric phenol is resorcinol and the dicarboxylic acid is hexahydrophthalic acid.

4. A process according to any of the preceding claims in which the component b) of the copolymer A) is n-octyl-, lauryl- or octadecyl methacrylate, styrene, hydroxyethyl methacrylate or a mixture of these.

5. A process according to any of the preceding claims in which the component c) of the graft copolymer A) is methyl methacrylate.

6. A process according to any of the preceding claims in which component b) is present in copolymer A) in an amount of 40 to 50% by weight, based on the weight of component a).

7. A process according to any of the preceding claims in which component c) is present in copolymer A) in an amount of 40 to 50% by weight, based on the weight of component a).

8. A process according to any of the preceding claims in which the catalyst component d) is an inorganic or organic peroxide.

9. A process according to claim 8 in which the catalyst component d) is an acyl peroxide; a ketone peroxide; or a hydroperoxide.

10. A process according to claim 9 in which the catalyst component d) is benzoyl peroxide, p-chlorobenzoyl peroxide or t-butylperbenzoate; methyl ethyl ketone peroxide or cyclohexanone peroxide; or cumene peroxide or t-butyl hydroperoxide.

11. A process according to any of the preceding claims in which the amount of catalyst component d), present during the graft polymerization reaction, ranges from 1 to 10% by weight, based on the weight of component a), in order to achieve significant levels of grafting of the polymer from monomer b) and, optionally, c) on to the polymer chain of component a).

12. A process according to any of the preceding claims in which the curing agent, component B), is an aliphatic amine; dicyandiamide; an aromatic amine; a carboxylic acid; a phenol compound; or a polyester.

13. A process according to any of the preceding claims in which the curing agent is present in amount of 1 to 75% by weight, based on the weight of the graft copolymer.

14. A process according to claim 13 in which the curing agent is present in an amount of 5 to 40% by weight, based on the weight of the graft copolymer.

15. A process according to any of the preceding claims in which a curing agent accelerator is mixed together with A) and B).

16. A process according to any of the preceding claims in which one or more of a particulate filler or pigment; a flow control agent; a texture control additive; an air release agent; a gloss control additive; and a slip aid are mixed together with A) and B).

17. A method of coating an article comprising applying a powder coating prepared according to any of the preceding claims to an article to be coated; and curing the article so coated.

## Patentansprüche (Patentansprüche für folgende(n) Vertragsstaat(en): AT, BE, CH, DE, FR, GB, IT, LI, NL)

1. Pulverlackzusammensetzung, umfassend A) ein Copolymeres, hergestellt durch Polymerisation unter Pfropfpolymerisationsbedingungen a) eines festen Epoxidharzes mit einem Durchschnitt von mehr als einer vicinalen Epoxidgruppe pro Molekül und einem durchschnittlichen Epoxid-Äquivalentgewicht von größer als 500, hergestellt durch Kettenverlängerung eines Polyepoxids, das ein flüssiger Polyglycidylether oder Polyglycidylester ist mit einem molekularen Unterschuß eines Bisphenols, eines einkernigen zweiwertigen Phenols oder einer Dicarbonsäure; b) einer oder mehrerer der Komponenten i) eines C₈-C₁₈-Alkyl(meth)acrylats, ii) einer aromatischen Vinylverbindung der Formel 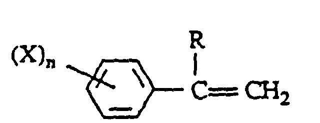 worin R Wasserstoff oder Methyl ist, X ist Wasserstoff, Halogen, C₁-C₄-Alkyl oder C₁-C₄-Alkoxy, und n ist 0, 1, 2, 3, 4 oder 5, und iii) eines (C₁-C₄)Hydroxyalkyl(meth)acrylats, und c) gegebenenfalls einer oder mehrerer der Komponenten i) eines (C₁-C₄)Alkyl(meth)acrylats und ii) eines (C₁-C₄)Hydroxyalkyl(meth)acrylats, mit der Maßgabe, daß die Komponenten b) und c) nicht jeweils ausschließlich ein (C₁-C₄)Hydroxyalkyl(meth)acrylat sind, in Gegenwart von d) einem Katalysator, der wirksam ist, die Pfropfpolymerisation eines Polymeren zu beschleunigen, das aus der Komponente b) und gegebenenfalls c) auf der Polymerkette der Komponente a) gebildet wird, wobei die Komponente b) in einer Menge von 5 bis 50 Gewichts-% vorhanden ist, bezogen auf das Gewicht der Komponente a), und die Komponente c) in einer Menge von 0 bis 55 Gewichts-% vorhanden ist, bezogen auf das Gewicht der Komponente a), und B) ein Härtungsmittel für das Copolymere A).

2. Zusammensetzung nach Anspruch 1, worin das Polyepoxid ein Diglycidylether von 2,2-Bis(4-hydroxyphenyl)propan oder von Bis(4-hydroxyphenyl)methan ist und einen 1,2-Epoxidgehalt von mehr als 1,0 Äquivalent pro Kilogramm hat.

3. Zusammensetzung nach Anspruch 1 oder 2, worin das Bisphenol Bisphenol A oder Tetrabrombisphenol A ist, das zweiwertige Phenol ist Resorcinol, und die Dicarbonsäure ist Hexahydrophthalsäure.

4. Zusammensetzung nach einem der vorangegangenen Ansprüche, worin die Komponente b) des Copolymeren A) n-Octyl-, Lauryl- oder Octadecyl-methacrylat, Styrol, Hydroxyethylmethacrylat oder ein Gemisch dieser ist.

5. Zusammensetzung nach einem der vorangegangenen Ansprüche, worin die Komponente c) des Pfropf-Copolymeren A) Methylmethacrylat ist.

6. Zusammensetzung nach einem der vorangegangenen Ansprüche, worin die Komponente b) in dem Copolymeren A) in einer Menge von 40 bis 50 Gewichts-% vorhanden ist, bezogen auf das Gewicht der Komponente a).

7. Zusammensetzung nach einem der vorangegangenen Ansprüche, worin die Komponente c) in dem Copolymeren A) in einer Menge von 40 bis 50 Gewichts-% vorhanden ist, bezogen auf das Gewicht der Komponente a).

8. Zusammensetzung nach einem der vorangegangenen Ansprüche, worin die Katalysatorkomponente d) ein anorganisches oder organisches Peroxid ist.

9. Zusammensetzung nach Anspruch 8, worin die Katalysatorkomponente d) ein Acylperoxid; ein Ketonperoxid; oder ein Hydroperoxid ist.

10. Zusammensetzung nach Anspruch 9, worin die Katalysatorkomponete d) Benzoylperoxid, p-Chlorbenzoylperoxid oder t-Butylperbenzoat; Methylethylketonperoxid oder Cyclohexanonperoxid; oder Cumolperoxid oder t-Butylhydroperoxid ist.

11. Zusammensetzung nach einem der vorangegangenen Ansprüche, worin die Menge der Katalysatorkomponente d), die während der Pfropfpolymerisationsreaktion vorhanden ist, im Bereich von 1 bis 10 Gewichts-% liegt, bezogen auf das Gewicht der Komponente a), um ein signifikantes Niveau des Pfropfens des Polymeren aus dem Monomeren b) und gegebenenfalls c) auf der Polymerkette der Komponente a) zu erreichen.

12. Zusammensetzung nach einem der vorangegangenen Ansprüche, worin das Härtungsmittel, die Komponente B), ein aliphatisches Amin; Dicyandiamid; ein aromatisches Amin; eine Carbonsäure, eine Phenolverbindung; oder ein Polyester ist.

13. Zusammensetzung nach einem der vorangegangenen Ansprüche, worin das Härtungsmittel in einer Menge von 1 bis 75 Gewichts% vorhanden ist, bezogen auf das Gewicht des Pfropf-Copolymeren.

14. Zusammensetzung nach Anspruch 13, worin das Härtungsmittel in einer Menge von 5 bis 40 Gewichts-% vorhanden ist, bezogen auf das Gewicht des Pfropf-Copolymeren.

15. Zusammensetzung nach einem der vorangegangenen Ansprüche, worin ein Härtungsmittelbeschleuniger vorhanden ist.

16. Zusammensetzung nach einem der vorangegangenen Ansprüche, worin auch ein oder mehrere teilchenförmige Füllstoffe oder Pigmente vorhanden sind; ein Fließsteuerungsmittel; ein Textursteuerungsadditiv; ein Luftfreisetzungsmittel; ein Glanzsteuerungsadditiv und eine Gleithilfe.

17. Verfahren zu Beschichtung eines Gegenstandes, gekennzeichnet durch das Aufbringen einer Pulverbeschichtung nach einem der vorangegangenen Ansprüche auf einen zu beschichtenden Gegenstand und Härten des so beschichteten Gegenstandes.

18. Gegenstand, beschichtet nach einem Verfahren, das in Anspruch 17 beansprucht wurde.

## Patentansprüche (Patentansprüche für folgende(n) Vertragsstaat(en): ES)

1. Verfahren zur Herstellung einer Pulverlackzusammensetzung, umfassend das Vermischen von A) eines Copolymeren, hergestellt durch Polymerisation unter Pfropfpolymerisationsbedingungen a) eines festen Epoxidharzes mit einem Durchschnitt von mehr als einer vicinalen Epoxidgruppe pro Molekül und einem durchschnittlichen Epoxid-Äquivalentgewicht von größer als 500, hergestellt durch Kettenverlängerung eines Polyepoxids, das ein flüssiger Polyglycidylether oder Polyglycidylester ist mit einem molekularen Unterschuß eines Bis-phenols, eines einkernigen zweiwertigen Phenols oder einer Dicarbonsäure; b) einer oder mehrerer der Komponenten i) eines C₈-C₁₈-Alkyl(meth)acrylats, ii) einer aromatischen Vinylverbindung der Formel 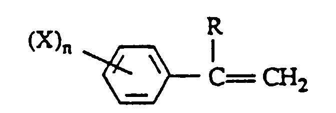 worin R Wasserstoff oder Methyl ist, X ist Wasserstoff, Halogen, C₁-C₄-Alkyl oder C₁-C₄-Alkoxy, und n ist 0, 1, 2, 3, 4 oder 5, und iii) eines (C₁-C₄)Hydroxyalkyl(meth)acrylats, und c) gegebenenfalls einer oder mehrerer der Komponenten i) eines (C₁-C₄)Alkyl(meth)acrylats und ii) eines (C₁-C₄)Hydroxyalkyl(meth)acrylats, mit der Maßgabe, daß die Komponenten b) und c) nicht jeweils ausschließlich ein (C₁-C₄)Hydroxyalkyl(meth)acrylat sind, in Gegenwart von d) einem Katalysator, der wirksam ist, die Pfropfpolymerisation eines Polymeren zu beschleunigen, das aus der Komponente b) und gegebenenfalls c) auf der Polymerkette der Komponente a) gebildet wird, wobei die Komponente b) in einer Menge von 5 bis 50 Gewichts-% vorhanden ist, bezogen auf das Gewicht der Komponente a), und die Komponente c) in einer Menge von 0 bis 55 Gewichts-% vorhanden ist, bezogen auf das Gewicht der Komponente a), und B) eines Härtungsmittels für das Copolymere A).

2. Verfahren nach Anspruch 1, worin das Polyepoxid ein Diglycidylether von 2,2-Bis(4-hydroxyphenyl)propan oder von Bis(4-hydroxyphenyl)methan ist und einen 1,2-Epoxidgehalt von mehr als 1,0 Äquivalent pro Kilogramm hat.

3. Verfahren nach Anspruch 1 oder 2, worin das Bisphenol Bisphenol A oder Tetrabrombisphenol A ist, das zweiwertige Phenol ist Resorcinol, und die Dicarbonsäure ist Hexahydro-phthalsäure.

4. Verfahren nach einem der vorangegangenen Ansprüche, worin die Komponente b) des Copolymeren A) n-Octyl-, Lauryl- oder Octadecyl-methacrylat, Styrol, Hydroxyethylmethacrylat oder ein Gemisch dieser ist.

5. Verfahren nach einem der vorangegangenen Ansprüche, worin die Komponente c) des Pfropf-Copolymeren A) Methylmethacrylat ist.

6. Verfahren nach einem der vorangegangenen Ansprüche, worin die Komponente b) in dem Copolymeren A) in einer Menge von 40 bis 50 Gewichts-% vorhanden ist, bezogen auf das Gewicht der Komponente a).

7. Verfahren nach einem der vorangegangenen Ansprüche, worin die Komponente c) in dem Copolymeren A) in einer Menge von 40 bis 50 Gewichts-% vorhanden ist, bezogen auf das Gewicht der Komponente a).

8. Verfahren nach einem der vorangegangenen Ansprüche, worin die Katalysatorkomponente d) ein anorganisches oder organisches Peroxid ist.

9. Verfahren nach Anspruch 8, worin die Katalysatorkomponente d) ein Acylperoxid; ein Ketonperoxid; oder ein Hydroperoxid ist.

10. Verfahren nach Anspruch 9, worin die Katalysatorkomponete d) Benzoylperoxid, p-Chlorbenzoylperoxid oder t-Butylperbenzoat; Methylethylketonperoxid oder Cyclohexanonperoxid; oder Cumolperoxid oder t-Butylhydroperoxid ist.

11. Verfahren nach einem der vorangegangenen Ansprüche, worin die Menge der Katalysatorkomponente d), die während der Pfropfpolymerisationsreaktion vorhanden ist, im Bereich von 1 bis 10 Gewichts-% liegt, bezogen auf das Gewicht der Komponente a), um ein signifikantes Niveau des Pfropfens des Polymeren aus dem Monomeren b) und gegebenenfalls c) auf der Polymerkette der Komponente a) zu erreichen.

12. Verfahren nach einem der vorangegangenen Ansprüche, worin das Härtungsmittel, die Komponente B), ein aliphatisches Amin; Dicyandiamid; ein aromatisches Amin; eine Carbonsäure, eine Phenolverbindung; oder ein Polyester ist.

13. Verfahren nach einem der vorangegangenen Ansprüche, worin das Härtungsmittel in einer Menge von 1 bis 75 Gewichts-% vorhanden ist, bezogen auf das Gewicht des Pfropf-Copolymeren.

14. Verfahren nach Anspruch 13, worin das Härtungsmittel in einer Menge von 5 bis 40 Gewichts-% vorhanden ist, bezogen auf das Gewicht des Pfropf-Copolymeren.

15. Verfahren nach einem der vorangegangenen Ansprüche, worin ein Härtungsmittelbeschleuniger mit den Komponenten A) und B) vermischt wird.

16. Verfahren nach einem der vorangegangenen Ansprüche, worin ein oder mehrere teilchenförmige Füllstoffe oder Pigmente; ein Fließsteuerungsmittel; ein Textursteuerungsadditiv; ein Luftfreisetzungsmittel; ein Glanzsteuerungsadditiv und eine Gleithilfe mit den Komponenten A) und B) vermischt werden.

17. Verfahren zu Beschichtung eines Gegenstandes, gekennzeichnet durch das Aufbringen einer Pulverbeschichtung, die nach einem der vorangegangenen Ansprüche hergestellt wird, auf einen zu beschichtenden Gegenstand; und Härten des so beschichteten Gegenstandes.

## Revendications (Revendications pour l'(les) Etat(s) contractant(s) suivant(s): AT, BE, CH, DE, FR, GB, IT, LI, NL)

1. Composition de revêtement à poudre comprenant A) un copolymère formé en polymérisant, dans des conditions de polymérisation par greffage, a) une résine époxyde solide comportant une moyenne de plus d'un groupe époxyde voisin par molécule et un poids équivalent moyen en époxyde supérieur à 500, obtenu en développant un polyépoxyde qui est un éther polyglycidylique ou un ester polyglycidylique liquide présentant un déficit moléculaire en bisphénol, en hydroxyphénol mononucléaire ou en acide dicarboxylique ; b) un ou plusieurs de i) un méthacrylate d'alkyle en C₈-C₁₈, ii) un arène vinylaromatique de formule 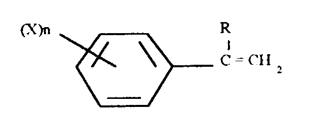 où R est un atome d'hydrogène ou un groupement méthyle, X est un atome d'hydrogène ou un halogène, C₁-C₄ ou un alcoxyle en C1-C4 et n est 0, 1, 2, 3, 4 ou 5 et iii) un méthacrylate d'hydroxyalkyle (en C₁-C₄) et C) facultativement un ou plusieurs de i) un méthacrylate d'alkyle (en C₁-C₄) et ii) un méthacrylate d'hydroxyalkyle (en C₁-C₄) à la condition que les composés b) et c) ne soient pas chacun exclusivement un méthacrylate d'hydroxyalkyle (en C₁-C₄) en présence de d) un catalyseur qui est efficace pour favoriser la polymérisation par greffage d'un polymère constitué d'un composé b) et de facultativement c) sur la chaîne polymérique du composé a), le composé b) étant présent en une quantité de 5 à 50% en poids sur la base du poids du composé a) et le composé c) étant présent en une quantité de 0 à 55% en poids sur la base du poids du composé a) et B) un agent de durcissement pour copolymère A).

2. Composition selon la revendication 1, dans laquelle le polyépoxyde est un diéther glycidylique de 2,2-bis(4-hydroxyphényl)propane ou de bis(4-hydroxyphényl)méthane et possède une teneur en 1,2-époxyde de plus de 1,0 équivalent par kilogramme.

3. Composition selon la revendication 1 ou 2, dans laquelle le bisphénol est le bisphénol A ou le tétrabromobisphénol A, l'hydroxyphénol est le résorcinol et l'acide dicarboxylique est l'acide hexahydrophtalique.

4. Composition selon l'une quelconque des revendications précédentes, dans laquelle le composé b) du copolymère A) est le méthacrylate d'octyle, de lauryle ou octadécyle, le styrène, le méthacrylate d'hydroxyéthyle ou l'un de leurs mélanges.

5. Composition selon l'une quelconque des revendications précédentes, dans laquelle le composé c) du copolymère greffé A) est le méthacrylate de méthyle.

6. Composition selon l'une quelconque des revendications précédentes, dans laquelle le composé b) est présent dans le copolymère A) en une quantité comprise entre 40 et 50% en poids sur la base du poids du composé a).

7. Composition selon l'une quelconque des revendications précédentes, dans laquelle le composé c) est présent dans le copolymère A) en une quantité comprise entre 40 et 50% en poids sur la base du poids du composé a).

8. Composition selon l'une quelconque des revendications précédentes, dans laquelle le catalyseur d) est un peroxyde organique ou inorganique.

9. Composition selon la revendication 8, dans laquelle le catalyseur d) est un perester ; un peroxyde de dialkyle ou un hydroperoxyde.

10. Composition selon la revendication 9, dans laquelle le catalyseur d) est un peroxyde de benzoyle ; un peroxyde de p-chlorobenzoyle ou un peroxybenzoate de tertiobutyle, un peroxyde d'éthyle et de méthyle ou un peroxyde de dicyclohexyle ou un peroxyde de cumyle ou un hydroperoxyde de tertiobutyle.

11. Composition selon l'une quelconque des revendications précédentes, dans laquelle la quantité de catalyseur d) présent pendant la réaction de polymérisation par greffage est compris dans l'intervalle allant de 1 à 10% en poids sur la base du poids du composé a) en vue de réaliser des niveaux significatifs de greffage du polymère à partir du monomère b) et facultativement c) sur la chaîne polymère du composé a).

12. Composition selon l'une quelconque des revendications précédentes, dans laquelle l'agent de cuisson, le composé B) est une amine aliphatique, une dicyanodiamide, une amine aromatique, un acide carboxylique, un dérivé du phénol ou un polyester.

13. Composition selon l'une quelconque des revendications précédentes, dans laquelle l'agent de cuisson est présent en une quantité comprise entre 1 et 75% en poids sur la base du poids du copolymère greffé.

14. Composition selon la revendication 13, dans laquelle l'agent de cuisson est présent en une quantité comprise entre 5 et 40% en poids sur la base du poids du copolymère greffé.

15. Composition selon l'une quelconque des revendications précédentes, dans laquelle est présent un accélérateur de l'agent de cuisson.

16. Composition selon l'une quelconque des revendications précédentes, dans laquelle sont également présents un ou plusieurs d'une charge ou d'un pigment particulaire, d'un agent régulateur du fluage, d'un additif de contrôle de texture, d'un agent débulleur, d'un additif de contrôle du brillant et d'un stimulateur de glissement.

17. Procédé de revêtement d'un article comprenant les étapes consistant à appliquer un revêtement poudreux selon l'une quelconque des revendications précédentes sur un article destiné à être recouvert et à cuire l'article ainsi revêtu.

18. Article lorsqu'il est revêtu par le procédé selon la revendication 17.

## Revendications (Revendications pour l'(les) Etat(s) contractant(s) suivant(s): ES)

1. Procédé pour la préparation d'une composition de revêtement à poudre consistant à mélanger A) un copolymère produit par polymérisation, dans des conditions de polymérisation par greffage, a) une résine époxyde solide comportant une moyenne de plus d'un groupe époxyde voisin par molécule et un poids équivalent moyen en époxyde supérieur à 500, produit en développant un polyépoxyde qui est un éther polyglycidylique ou un ester polyglycidylique liquide présentant un déficit moléculaire en bisphénol, en dihydroxyphénol mononucléaire ou en acide dicarboxylique ; b) un ou plusieurs de i) un méthacrylate d'alkyle en C₈-C₁₈, ii) un composé vinylaromatique de formule 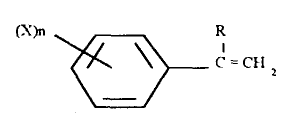 où R est un atome d'hydrogène ou un groupement méthyle, X est un atome d'hydrogène ou un halogène, alkyle en C₁-C₄ ou un alcoxyle en C₁-C₄ et n est 0, 1, 2, 3, 4 ou 5 et iii) un méthacrylate d'hydroxyalkyle (en C₁-C₄) et C) facultativement un ou plusieurs de i) un méthacrylate d'alkyle (en C₁-C₄) et ii) un méthacrylate d'hydroxyalkyle (en C₁-C₄) à la condition que les composés b) et c) ne soient pas chacun exclusivement un méthacrylate d'hydroxyalkyle (en C₁-C₄) en présence de d) un catalyseur qui est efficace pour favoriser la polymérisation par greffage d'un polymère constitué d'un composé b) et de facultativement c) sur la chaîne polymérique du composé a), le composé b) étant présent en une quantité de 5 à 50% en poids sur la base du poids du composé a) et le composé c) étant présent en une quantité de 0 à 55% en poids sur la base du poids du composé a) et B) un agent de durcissement pour copolymère A).

2. Procédé selon la revendication 1, dans lequel le polyépoxyde est un diéther glycidylique de 2,2-bis(4-hydroxyphényl)propane ou de bis(4-hydroxyphényl)méthane et possède une teneur en 1,2-époxyde de plus de 1,0 équivalent par kilogramme.

3. Procédé selon la revendication 1 ou 2, dans lequel le bisphénol est le bisphénol A ou le tétrabromobisphénol A, le dihydroxyphénol est le résorcinol et l'acide dicarboxylique est l'acide hexahydrophtalique.

4. Procédé selon l'une quelconque des revendications, dans lequel le composé b) du copolymère A) est le méthacrylate d'octyle, de lauryle ou octadécyle, le styrène, le méthacrylate d'hydroxyéthyle ou l'un de leurs mélanges.

5. Procédé selon l'une quelconque des revendications précédentes, dans lequel le composé c) du copolymère greffé A) est le méthacrylate de méthyle.

6. Procédé selon l'une quelconque des revendications précédentes, dans lequel le composé b) est présent dans le copolymère A) en une quantité comprise entre 40 et 50% en poids sur la base du poids du composé a).

7. Procédé selon l'une quelconque des revendications précédentes, dans lequel le composé c) est présent dans le copolymère A) en une quantité comprise entre 40 et 50% en poids sur la base du poids du composé a).

8. Procédé selon l'une quelconque des revendications précédentes, dans lequel le catalyseur d) est un peroxyde organique ou inorganique.

9. Procédé selon la revendication 9, dans lequel le catalyseur d) est un perester ; un détoperoxyde ou un hydroperoxyde.

10. Procédé selon la revendication 9, dans lequel le catalyseur d) est un peroxyde de benzoyle ; un peroxyde de p-chlorobenzoyle ou un peroxybenzoate de t-butyle, un peroxyde d'éthyle et de méthyle ou un peroxyde de dicyclohexyle ou un peroxyde de cumyle ou un hydroperoxyde de t-butyle.

11. Procédé selon l'une quelconque des revendications précédentes, dans lequel la quantité de catalyseur d) présent pendant la réaction de polymérisation par greffage est compris dans l'intervalle allant de 1 à 10% en poids sur la base du poids du composé a) en vue de réaliser des niveaux significatifs de greffage du polymère à partir du monomère b) et facultativement c) sur la chaîne polymère du composé a).

12. Procédé selon l'une quelconque des revendications précédentes, dans lequel l'agent de durcissement, le composé B) est une amine aliphatique, un dicyanodiamide, une amine aromatique, un acide carboxylique, un dérivé du phénol ou un polyester.

13. Procédé selon l'une quelconque des revendications précédentes, dans lequel l'agent de durcissement est présent en une quantité de 1 à 75% en poids sur la base du poids du copolymère greffé.

14. Procédé selon la revendication 13, dans lequel l'agent de durcissement est présent en une quantité de 5 à 40% en poids sur la base du poids du copolymère greffé.

15. Procédé selon l'une quelconque des revendications précédentes, dans lequel un accélérateur de l'agent de durcissement est mélangé avec A) et B).

16. Procédé selon l'une quelconque des revendications précédentes, dans lequel un ou plusieurs d'une charge ou d'un pigment particulaire, d'un agent régulateur de la fluidité, d'un additif de contrôle de texture, d'un agent débulleur, d'un additif de contrôle du brillant et d'un adjuvant de glissement sont mélangés avec A) et B).

17. Procédé de revêtement d'un article comprenant les étapes consistant à appliquer un revêtement poudreux préparé selon l'une quelconque des revendications précédentes sur un article destiné à être recouvert et à durcir l'article ainsi revêtu.
